# EUROPEAN PATENT APPLICATION

(11) **EP 2 440 017 A2**
(43) Date of publication of application: **11.04.2012**
(21) Application number: 11181499.2
(22) Date of filing: 15.09.2011
(51) Int. Cl.: H05B 33/08

(54) **Lighting Systems**

(30) Priority: 15.09.2010 GB 1015393
(71) Applicant: Saf-t-Glo Limited, Swaffham, Norfolk PE37 7XD (GB)
(72) Inventor: Rust, Daniel A., Norwich, Norfolk NR2 3AT (GB)
(74) Representative: Wightman, David Alexander

(57) **Abstract**

An LED light unit 5 is provided with terminal pins 11 at each end for fitting the light unit 5 in place of a fluorescent tube of a fluorescent lighting fixture connected to a power source. The light unit 5 has a circuit board 9 with a plurality of diodes 15a configured to provide at least one string of visible light producing LEDs and at least one string of zener diodes. The strings are driven by drive means 17 whereby a constant input operating voltage to the light unit 5 is provided when the light unit is used with a ballast and the power derived is dissipated in any one or more of the strings.

## Description

This invention relates to lighting systems. The invention has particular, but not exclusive, application to passenger transport vehicles (PTVs) such as aircraft and coaches.

Heretofore fluorescent lighting has commonly been used to illuminate passenger compartments in PTVs for normal activities. Fluorescent lighting can be adjusted to alter the brightness to better suit particular activities such as reading, sleeping, eating. Recently it has been proposed to use LED lighting which can be adjusted to alter both the brightness and colour and is sometimes referred to as "mood" lighting.

It is relatively straightforward to install LED lighting as original equipment in new build PTVs. However, replacing fluorescent lighting with LED lighting such as when refurbishing an existing PTV can be more complicated adding to installation costs.

The present invention has been made from a consideration of the foregoing.

In a first aspect, the present invention provides an LED light unit for replacing a fluorescent tube of a fluorescent lighting fixture connected to a power source, the light unit having at least one visible light producing LED load and at least one non visible light producing load, wherein the loads are driven to provide a constant input operating voltage to the light unit when the light unit is used with a ballast and wherein the power derived is dissipated in any one or more of the loads.

The power may be dissipated through one or more visible light transmitting loads only, or through one or more non visible light transmitting loads only or through any combination of one or more visible light transmitting loads and one or more non visible light transmitting loads.

The or each LED load may comprise one or more circuits having one or more visible light emitting diodes (LEDs) for illumination and may comprise a string of LEDs. The LEDs may comprise white or coloured LEDs and may comprise a white LED string or a coloured LED string. Coloured LED strings may include but are not limited to a red LED string, a green LED string, and a blue LED string.

The or each non visible light producing load may include one or more circuits for dissipating excess power without creating visible light. Excess power may be dissipated through heat. The or each circuit may comprise one or more resistors. Alternatively, the or each circuit may comprise one or more zener diodes and may comprise a string of zener diodes. Other means of dissipating excess power without producing visible light may be employed, for example electromagnets, ultrasonic transmitters, infrared LEDs or ultraviolet LEDs.

Preferably, the light unit includes means for transferring heat away from the LED load. The heat transfer means may comprise a thermally conductive element configured to conduct heat away from the LED load and dissipate the heat to the surrounding air. The thermally conductive element may form part of a casing of the light unit.

Preferably, the light unit includes communication means for communicating with a remote control unit. The communication means may comprise a wired link but more preferably comprises a wireless link, for example an infra-red data link may be employed. The wireless link may also allow communication between light units for relaying a control signal received by one light unit to another light unit. The light units may be configured for use with a wired link or a wireless link according to system requirements.

The light unit may include a means for changing the direction of the light emitted by the LED string(s). For example, a body of the light unit may be rotatable relative to terminals at each end of the unit for mounting the unit in place of a fluorescent tube of a fluorescent lighting fixture.

Preferably, the light unit is operable to vary the brightness and/or colour of the light emitted by the LED load(s) to alter the illumination provided by the light unit.

In a second aspect, the present invention provides an LED lighting system comprising a plurality of LED light units according to the preceding aspect of the invention and a control unit for controlling the LED light units.

Preferably a wireless link is provided for transmitting a control signal from the control unit to the light units. The wireless link may be provided by an infra-red data link.

The control unit may communicate directly with all the light units. Alternatively, the control unit may communicate with at least one light unit and the control signal is relayed from said at least one light unit to the remaining light units.

Preferably, the control signal is propagated throughout the system of light units by retransmission. Retransmission may use an acknowledged protocol or more preferably uses an unacknowledged protocol. The unacknowledged protocol avoids the need to contain a destination address or to acknowledge receipt of a message allowing faster transmission of the message.

In such unacknowledged protocol, receipt of a message from a first transmitting light unit is assured by the subsequent retransmission of the message by a second receiving light unit whose retransmission is visible to the first transmitting unit and subsequent light units which could not receive the message from the first light unit.

In this way, the propagation ends when no further light units are left to receive the message and retries from previous transmitting light units which see no further retransmission of the message count out.

In one arrangement, the control signal preferably includes a data field containing a hop count that indicates the number of times the control signal has been transmitted and the data field is incremented by one on receipt of the control signal before any retransmission and retransmission only occurs if the hop count in a received control signal is less than a hop count limit.

In another arrangement, the control signal preferably includes a data field containing a record of the retransmission time delay used by each transmitting light unit. The data field preferably represents the total time elapsed since the message was initiated by the control unit and may be used to produce a synchronous control effect in required light units of the system after a fixed or variable time delay to negate the effects of the control signal propagation delay from the relaying protocol.

In another arrangement, the relaying protocol employs a double transmission of each message wherein a first transmission is propagated using a reduced number of back-off time slots which speeds up delivery but increases the chances of failure and a second transmission of the same message is then propagated some time later using a greater number (or all) of the back-off time slots which slows down delivery but reduces the chances of failure.

In a third aspect, the present invention provides a data transmission network for dissemination of data amongst a group of recipients in which data is disseminated in a message containing the data, where the message includes a data field containing a hop count that indicates the number of times the message has been transmitted and each recipient increments the data field by one on receipt of the message and only retransmits the message if the hop count in the received message is less than a hop count limit.

The message may be propagated by an acknowledged protocol but more preferably, the message is propagated throughout the group of recipients by retransmission using an unacknowledged protocol. The unacknowledged protocol avoids the need to contain a destination address or to acknowledge receipt of the message allowing faster transmission of the message.

In such unacknowledged protocol, receipt of a message from a first transmitting recipient is assured by the subsequent retransmission of the message by a second recipient whose retransmission is visible to subsequent recipients which could not receive the message from the first recipient and the propagation ends when no further recipients are left to receive the message and retries from previous recipients which see no further retransmission of the message count out

The network may comprise a plurality of light units configured to receive and retransmit a control signal from a control unit for controlling the light units. The light units may be as described above in connection with the first aspect of the invention and the network may be employed in the lighting system of the second aspect of the invention.

In a fourth aspect, the present invention provides a data transmission network for dissemination of data amongst a group of recipients in which data is disseminated using a message containing the data, where the message includes a data field containing a record of the retransmission time delay used by each recipient and wherein the data field represents the total time elapsed since the message was initiated and is used to provide a synchronous control effect in required recipients after a fixed or variable time delay to negate the effects of the message propagation delay from the relaying protocol.

The message may be propagated by an acknowledged protocol but more preferably, the message is propagated throughout the group of recipients by retransmission using an unacknowledged protocol. The unacknowledged protocol avoids the need to contain a destination address or to acknowledge receipt of a message allowing faster transmission of the message.

In such unacknowledged protocol, receipt of a message from a first transmitting recipient is assured by the subsequent retransmission of the message by a second recipient whose retransmission is visible to subsequent recipients which could not receive the message from the first recipient and the propagation ends when no further recipients are left to receive the message and retries from previous recipients which see no further retransmission of the message count out.

The network may comprise a plurality of light units configured to receive and retransmit the message from a control unit for controlling the light units. The light units may be as described above in connection with the first aspect of the invention and the network may be employed in the lighting system of the second aspect of the invention.

In a fifth aspect, the present invention provides a relaying protocol for a data transmission network, the protocol employing a double transmission of each message wherein a first transmission is propagated using a reduced number of back-off time slots and a second transmission of the same message is then propagated some time later using a greater number (or all) of the back-off time slots.

The first transmission uses fewer back-off time slots than the second transmission. Reducing the number (less than all) of back-off time slots in the first transmission can speed up delivery but increases the chances of failure and using a greater number (or all) of back-off time slots in the second transmission may slow down delivery but reduces the chances of failure.

The message may be propagated by an acknowledged protocol but more preferably, the message is propagated throughout the group of recipients by retransmission using an unacknowledged protocol. The unacknowledged protocol avoids the need to contain a destination address or to acknowledge receipt of the control signal allowing faster transmission of the control signal.

In such unacknowledged protocol, receipt of a message from a first transmitting recipient is assured by the subsequent retransmission of the message by a second recipient whose retransmission is visible to subsequent recipients which could not receive the message from the first recipient and the propagation ends when no further recipients are left to receive the message and retries from previous recipients which see no further retransmission of the message count out

The network may comprise a plurality of light units configured to receive and retransmit the message from a control unit for controlling the light units. The light units may be as described above in connection with the first aspect of the invention and the protocol may be employed in the lighting system of the second aspect of the invention.

In a sixth aspect, the present invention provides a method of converting a fluorescent lighting fixture to an LED lighting fixture, comprising providing an LED light unit with an elongate housing having terminals at each end such that the LED light unit can directly replace a fluorescent tube of a fluorescent lighting fixture to produce an LED lighting fixture.

The LED light units may be as described above in connection with the first aspect of the invention and the method may be employed to provide the lighting system of the second aspect of the invention.

In a seventh aspect, the present invention provides an LED light unit comprising:
at least one visible light producing load;
at least one non visible light producing load;
a ballast;
control circuitry for driving the loads;
wherein
the loads are driven to provide a constant input operating voltage to the light unit and the power derived is dissipated in any one or more of the loads.

In such unit the power may be dissipated through one or more visible light transmitting loads only, or through one or more non visible light transmitting loads only or through any combination of one or more visible light transmitting loads and one or more non visible light transmitting loads.

The at least one visible light producing load may comprise a string of LEDs and the at least one non visible light producing load may comprise a string of zener diodes, and the power derived is preferably dissipated through the LED string only, or through the zener diode string only or through a combination of the LED and zener diode strings.

The light unit may be employed in a data transmission network according to the thirds and fourth aspects of the invention and such network may employ a relaying protocol according to the fifth aspect of the invention.

The invention will now be described in more detail by way of example only with reference to the accompanying drawings wherein:
**Figure 1** is a diagrammatic lay-out of an LED lighting system embodying the invention;
**Figure 2** is a perspective view of an LED lighting unit shown in Figure 1;
**Figure 3** is a block diagram showing the layout of the circuit blocks of the LED lighting unit of Figure 2;
**Figure 4** shows a detail of the light unit shown in Figures 2 and 3; and
**Figure 5** shows a power supply configuration with a ballast.

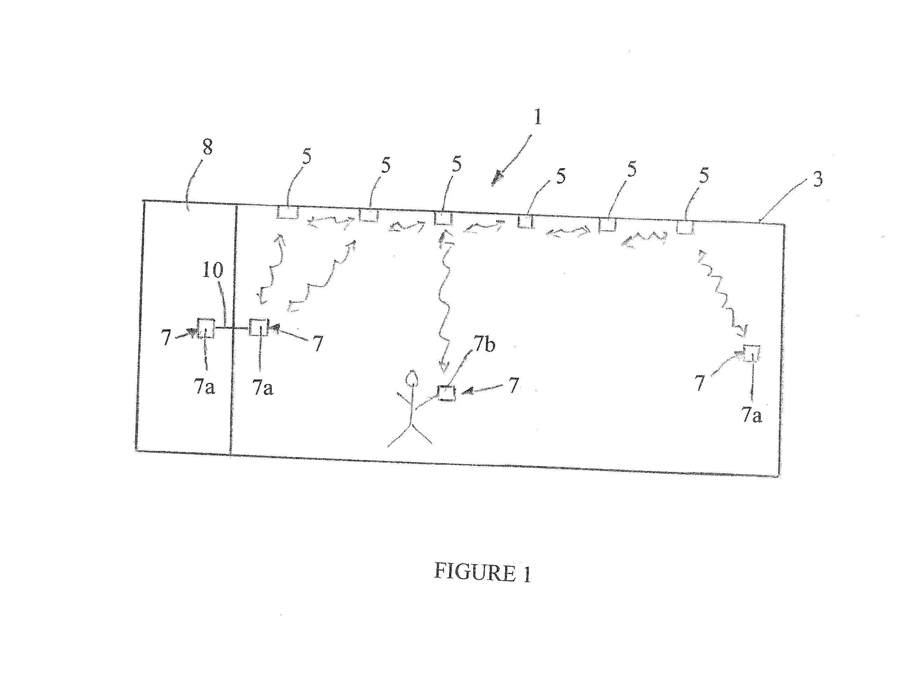

Referring first to Figure 1, an LED lighting system 1 for the passenger cabin 3 of an aircraft is shown and includes a plurality of LED lighting units 5 spaced apart along the length of the cabin 3 and one or more control units 7 for operating the light units 5 and adjusting the illumination provided by the light units 5. The control units 7 may include at least one fixed control unit 7a, for example a wall mounted unit, and/or at least one portable control unit 7b, for example a hand held unit for controlling the lighting within the cabin.

Where provided, the or each fixed control unit 7a may be mounted in the cabin for operation by the cabin crew. More than one fixed control unit 7a may be provided at spaced apart positions within the cabin 3, for example fixed control units 7a may be provided at the front end and rear end of the cabin.

Alternatively or additionally, a fixed control unit 7a may be provided in the cockpit 8 for operation by the flight crew. Where provided, the fixed control unit 7a in the cockpit 8 may be connected by a wire link 10 to a transmitter/receiver in the cabin 3 for communication with the light units 5. The transmitter/receiver may be another control unit 7a that allows the light units 5 to be controlled from within the cockpit 8 and/or from within the cabin 3. Alternatively, the transmitter/receiver may be a dedicated unit that only allows the light units to be controlled from within the cockpit 8.

Where provided, the or each portable control unit 7b may be carried by a crew member, for example the control unit 7b may be attached to a lanyard worn around the neck and including a quick release connection to allow the lanyard to be easily detached.

The or each control unit 7a, 7b may be adapted to prevent accidental or unauthorised operation, for example by requiring the user to input a security code to activate the control unit 7a, 7b.

The or each fixed control unit 7a may communicate with the light units 5 by a wired link or a wireless link while the or each portable control unit 7a may communicate with the light units 5 by a wireless link. Preferably, a wireless link is employed for both fixed control units 7a and portable control units 7b. Any suitable wireless link may be employed however use of an infra-red data link is preferred.

The wireless link may also allow communication between light units 5. In this way, a control signal or message from a fixed or portable control unit 7a, 7b can be relayed throughout the lighting system to reach units 5 that are out of range of the control units 7a, 7b. Communications between the or each control unit 7a, 7b and the light units 5 and between light units 5 may be achieved using either a protocol of acknowledged transmission or a protocol of unacknowledged transmission with random back-off.

Each light unit 5 may be adapted so that the light units can be controlled individually or in groups. In this way, the illumination may be the same throughout the cabin or the illumination may vary in different areas of the cabin. For example, the illumination of specific areas or zones of the cabin may be altered to provide any desired effect. The area or zone may be assigned to the light unit on installation. For example, each light unit may include a device such as a switch to set the area or zone in which the light unit is installed.

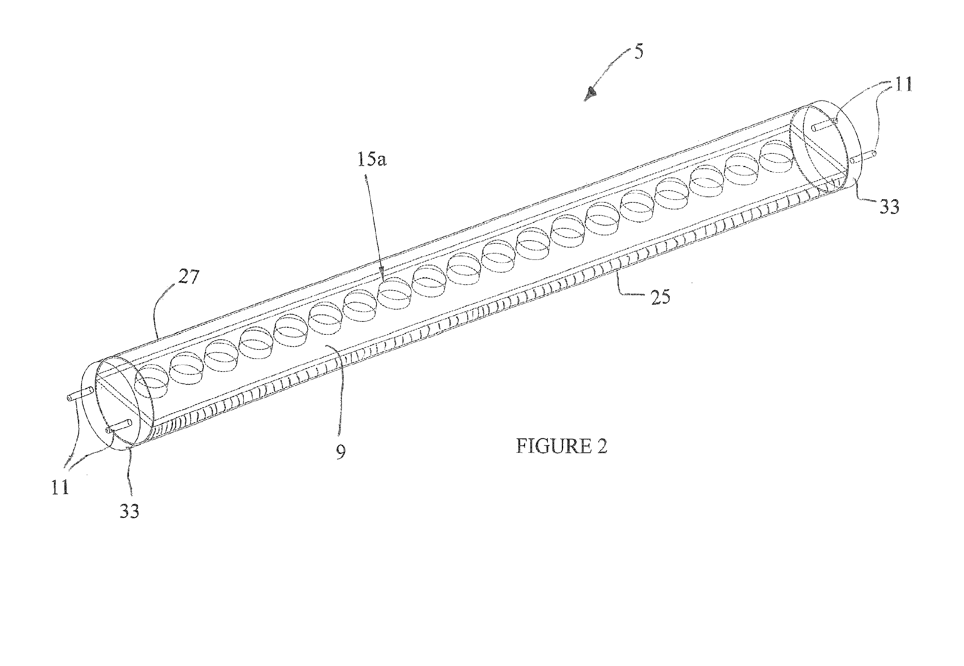

Referring now to Figures 2, 3 and 4, one of the LED light units 5 is shown in more detail. The light unit 5 is preferably configured so that it can be used either in a new installation or in an existing installation as a direct replacement for a fluorescent tube.

The light unit 5 preferably includes an elongate printed circuit board 9 having a plurality of diodes 15a on one side that may include diodes providing a visible light producing load and a non visible light producing load. The diodes providing the light producing load may comprise white or coloured light emitting diodes and may be arranged in one or more strings, for example a white string, a red string, a green string and a blue string. The diodes providing a non visible light producing load may comprise zener diodes and may be arranged in one or more strings separate from the LED strings. The zener diodes operate to dissipate power as heat without creating visible light. The zener diodes may be replaced by other power dissipation devices such as resistors.

The light unit 5 is preferably provided at each end with a pair of terminal pins 11 for connecting the light unit 5 to a power source. In a preferred form of the invention, the terminal pins 11 are similar to the terminal pins provided at the ends of fluorescent tubes by means of which the light unit 5 can be mounted in a base unit (not shown) of an existing fluorescent lighting fixture as a direct replacement for a fluorescent tube of the lighting fixture thereby converting the existing fluorescent lighting fixture to an LED lighting fixture.

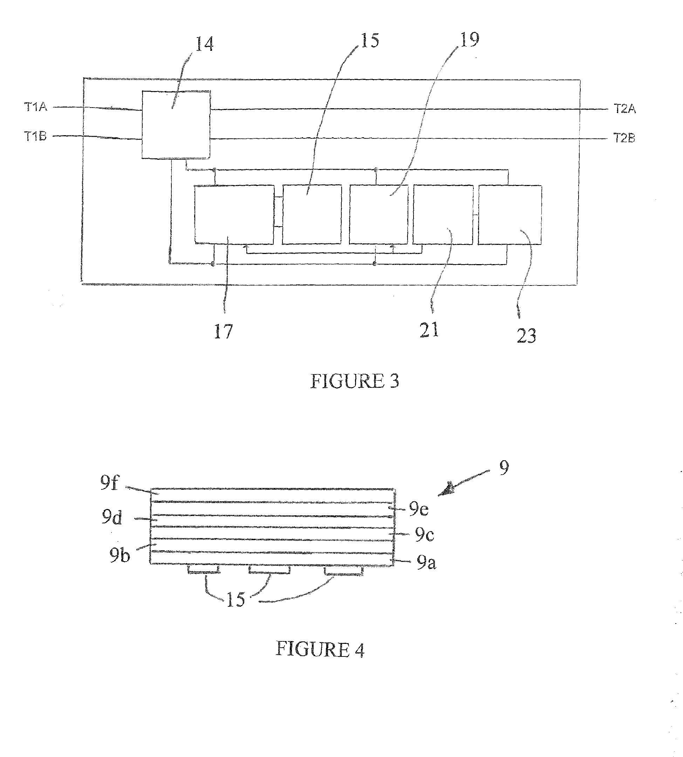

As best shown in Figure 3, the printed circuit board 9 preferably includes a bridge rectifier 14 to convert an AC supply across the pins 11 to a DC supply, a load indicated generally by reference numeral 15 preferably comprises one or more LED strings and one or more zener diode strings, a drive means 17 for the load 15, an infra-red transmitter and receiver 19, a central processing unit (CPU) 21 and an auxiliary power supply 23 for the CPU and control circuitry.

As best shown in Figure 4, printed circuit board 9 preferably comprises a number of layers, in this embodiment six layers 9a,b,c,d,e,f, with strings of LEDs and zener diodes providing the load 15 mounted on the front side (layer 9a) and control circuitry mounted on the back side (layer 9f). Intermediate layer 9b of the printed circuit board 9 is an electrically insulated copper plane, connected through copper vias to copper covered tabs (not shown) at the edge of the printed circuit board on layers 9a and 9f.

As best shown in Figure 2, a semicircular metal casing 25 covers the back side of the printed circuit board 9 and is mechanically and thermally attached to the printed circuit board 9. The casing 25 may be slotted to allow air to circulate through and around the casing 25.

The copper layer 2 allows heat to be dissipated away from the strings of LEDs mounted on layer 9a into the casing 25 and then via convection into the surrounding ambient air thereby reducing the LED operating temperature which in turn increases LED operating efficiency and component reliability.

A semicircular shield 27 may be used to cover the front side of the printed circuit board 9 and protect the strings of diodes while transmitting light from the LED strings for illumination and also allowing reception and transmission of control signals via the infra-red data link or any other suitable wireless link. The metal casing 25 can provide all the required mechanical rigidity and protection to the assembly such that the shield 27 may not be required.

The casing 25 and optional shield 27 surround the printed circuit board 9 within a tubular or semi tubular structure or housing resembling a fluorescent tube and the light unit 5 can be provided in a range of lengths for direct replacement of a fluorescent tube of the same length.

The CPU 21 controls the operation of the light unit 5 in response to control signals communicated to the light unit 5 via the infra-red transmitter and receiver 19. Control signals may be received directly from a control unit 7 or indirectly via another light unit 5.

The light unit 5 preferably includes one or more lighting circuits having one or more LED strings that provide visible light for illumination. Where an LED string has more than one light emitting diode, the diodes of that string are preferably of the same type, for example, white or coloured. The LED strings may comprise strings of the same or different types of LEDs that provide the illumination and are controlled to vary the brightness and colour of the light emitted by the light unit 5.

Some embodiments may comprise at least one white LED string, at least one red LED string, at least one green LED string, and at least one blue LED string. Other combinations of the LED strings are envisaged and within the scope of the invention.

The light unit 5 preferably also includes one or more power dissipation circuit(s) having one or more zener diode strings for dissipating power through heat without creating visible light.

The CPU 21 may include a memory for storing data for controlling operation of the light unit 5. The CPU 21 may have a read-only memory that may be pre-programmed with a plurality of operating sequences that can be selected from a control unit. Alternatively or additionally the CPU 21 may have a random access memory that allows an operating sequence to be input from a control unit 7 and/or allows changes to be made to a stored operating sequence.

The operating sequence may control any of the times to switch the light unit 5 on and off, the colour of the light emitted and changes to the intensity and/or colour of the light emitted. The operating sequence may be programmed to operate the light unit according to the time of day, for example to distinguish between night and day, and may provide a gradual change in brightness and/or colour representative of the changes occurring in light conditions, for example to imitate sunset and sunrise.

The light emitted from the LEDs is directional and the pins 11 at both ends of the light unit 5 may be provided by an end fitting 33 that is rotatable about the longitudinal axis of the light unit 5 so that the light unit 5 can be rotated relative to the base unit to change the direction in which the light is emitted. For example, a light unit 5 installed on the ceiling of the aircraft may be arranged to direct the light downwards and/or to one side of the cabin, for example to illuminate the wall of the cabin.

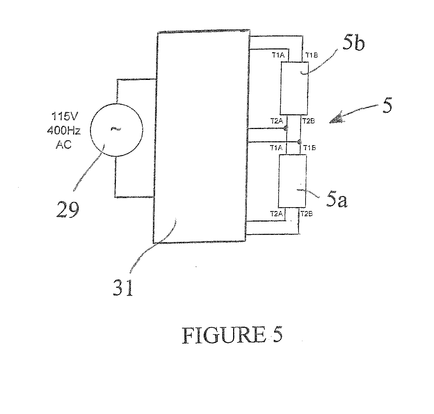

Referring now to Figure 5, there is shown the configuration of an aircraft power supply 29 for one or more light units 5 with a ballast 31 such as when replacing the fluorescent tube(s) in an existing fluorescent lighting system i.e. a retrofit installation of the light unit(s) or when fitting the unit(s) in a new system, i.e. an OE (original equipment) installation. As shown, where the power supply 29 is to more than one light unit 5 via the ballast 31, the light units 5a,5b are connected in series.

The colour and/or brightness of light emitted by the light unit 5a, 5b may be changed through controlling the time duration of illumination of each of the LED strings. The LED strings and zener diode strings are preferably driven in turn, for example at a commutation rate of approximately 200Hz, with only one string or circuit being driven at any one time and always one string or circuit being driven.

When operating with a fluorescent tube ballast 31, the illumination drive circuitry preferably acts to maintain a constant rms AC potential voltage between the terminals (between T1A or T1B and T2A or T2B) at either end of the light unit 5. The magnitude of this potential voltage is preferably set to be the same as the operating voltage of the fluorescent tube replaced by the light unit 5 thus ensuring that the maximum power is supplied from the ballast 31. The light unit 5 preferably maintains a constant input operating voltage by adjusting the power transferred to the light producing and non-light producing loads by any suitable means such as by using a buck-boost switch mode converter as the drive means 17.

If the voltage potential across the light unit 5 is too high, the switch mode converter attempts to transfer more power to the light producing and non-light producing loads which results in a reduction of the impedance of the light unit 5 as seen from the terminals 11 (between T1A or TIB and T2A or T2B) which, due to the presence of the ballast 31, results in a drop in potential across the terminals 11.

If the voltage potential across the light unit 5 is too low, the switch mode converter attempts to transfer less power to the light producing and non-light producing loads which results in an increase in the impedance of the light unit 5 as seen from the terminals 11 and hence results in an increase in potential across the terminals 11.

When two or more light units are operated in series with the ballast 31, for example light units 5a and 5b in Figure 5, then each of the light units absorbs the same amount of power from the ballast 31 due to that fact that the current through the light units 5a, 5b and the potential voltage across the light units 5a, 5b is the same. The voltage across the LED strings will vary dynamically throughout the LED string commutation cycle. However, due to the constant input voltage regulation mechanism described above, the power delivered to the light unit 5 will be constant and so the dynamic variations in LED string voltage in one light unit (5a or 5b) will not affect the power delivered to another light unit (5b or 5a) operating in series from the same ballast 31. Excess power can be dissipated as heat rather than light by means of the zener diode string(s) which also allow the visible light output of an individual light unit (5a or 5b) to be switched off while the other light unit(s) continue to operate to provide a visible light output.

The infra-red transmitter and receiver 19 incorporates an infra-red transmission circuit which preferably transmits data using a modulated infrared source (infrared LED), for example modulated at 56 kHz. Data may be transmitted in packets of approximately 100bits and 36ms in duration once every 2 seconds. During data transmission the average power consumed by the infrared LEDs is 1.3W and, in order to ensure that power supplied to the infrared LEDs does not momentarily affect the power supplied to the LED strings and hence cause a flicker visible to the human eye, the power to the infrared LEDs is preferably supplied from a bank of capacitors which is slow charged over the duration of the time when no infra red transmission is taking place.

The control signal for transmitting data may be transmitted using a broadcast only (unacknowledged) protocol where the control signal includes a data field containing a hop count that indicates the number of times the control signal has been re-transmitted and the data field is incremented by one on receipt of the control signal before any retransmission so that retransmission only occurs if the hop count in a received control signal is less than a hop count limit.

Receipt of a control signal from a first transmitting light unit may be assured by the subsequent retransmission of the controls signal by a second light receiving light unit whose retransmission is visible to the first transmitting light unit and one or more subsequent light units which could not receive the control signal from the first light unit and wherein the propagation ends when no further light units are left to receive the control signal and retries from previous transmitting light units which see no further retransmission of the message count out.

Thus, when a control signal is received and retransmitted by a light unit, the light unit may wait for a pre-determined time and then retransmit the control signal if it has not received a transmission of the control signal from another light unit. The number of times the light units may re-send the control signal before counting out may be set according to system requirements.

The control signal may include a data field containing a record of the retransmission time delay used by each transmitting light unit wherein the data field represents the total time elapsed since the message was initiated by the control unit and this can then be used to produce a synchronous control effect in one or more of the light units of the system after a fixed or variable time delay to negate the effects of the control signal propagation delay from the relaying protocol.

In this way selected or required light units can be switched on and off, or the brightness of the visible light from the light units increased or decreased, or the colour of the visible light from the light units changed substantially simultaneously. The time delay may be provided in the transmitted message or may be programmed into the light units for response according to the message received.

In the above embodiment, the infra-red receiver may be covered with a spectral filter to reduce interference from light outside of the infra-red range and the infra-red light used for communications may modulated at a predetermined frequency, or spread of frequencies such that it may be distinguished from background sources of infra-red which are normally either un-modulated (in the case of infra-red from sunlight) or modulated at a different frequency (such as infra-red from incandescent and fluorescent lights).

In a modification, each light unit may be provided with two or more infra-red receivers and the LED strings driven in two or more banks arranged such that at least one detector is unaffected by the illumination light of the LEDs. For example, an infra-red receiver may be placed at each end of the light unit and the LED strings arranged in two banks, one bank in the left half of the light unit and the other bank in the right half of the light unit, with the drive alternating between the banks so that, when one bank is on, the other bank is off. In this way, one infra-red receiver is always in a dark section of the light unit and infra-red signals received by the two detectors are combined to provide continuous coverage for controlling operation of the light unit.

In a network employing a multi-hop message relaying system, the total signal propagation time may become significant where the total hop count to reach all recipients is large and the data rate/carrier detection speed is low,

Typically, when a recipient receives a message, it selects a random delay time before re-transmission, and waits for this time period before checking the channel is clear (i.e. no other recipients locally have selected a shorter delay time and begun transmission) and then transmits. The delays are structured into a number of slots, so the recipient randomly selects a slot number to begin transmission in.

The width (in time) of each slot is determined by the minimum time in which another recipient's transmission can be detected such that a recipient having begun transmission in the previous slot will get detected before a transmission is attempted in the next slot.

This minimum time is at best a symbol width (1/data rate) and if a scheme such as pulse position modulation is being used with an on-off keyed carrier, this slot width can become many symbol widths. It is desirable to allocate many slots, such that the probability of two recipients randomly selecting the same slot becomes low (and so probability of message collisions is reduced).

In a large system, the average hop time will be [slot width x number of slots]/2. Where there is a need for speedy message delivery and a high assurance of message delivery to all recipients, these factors become conflicting.

In a further modification, the present invention provides a protocol for improving message delivery times whilst maintaining high assurance levels of final delivery in very low data rate and wireless, preferably infra-red, communications by employing a double transmission of each message.

The first transmission is propagated using a reduced number of back-off time slots (the lower number slots) which speeds up delivery but increases the chances of failure. The second transmission of the same message is then propagated as a catch all some time later using a greater number (or all) of the back-off time slots which slows down delivery but reduces the chances of failure. The first transmission uses fewer of the back-off time slots than the second transmission.

In this way, it may be that in the few cases where a propagation fails in the first transmission (speedy attempt), the message is delivered some time later from the second transmission (slower but more robust attempt).

As a result, where the effects of a late message may be undesirable but not dangerous (but perhaps no message delivery is potentially highly undesirable) then this protocol serves to provide speed and assurance of final delivery at the expense of occasional undesirable effects.

It will be understood that the invention is not limited to the embodiments above-described. For example, the infra-red data link employed to transmit control signals to the light units may be replaced by any other suitable link whether wireless or wired.

Although in the preferred embodiment of the invention, the light unit is configured to replace a fluorescent tube in an existing fluorescent light fixture, it will be understood that the invention is not limited thereto and that the invention includes light units provided as part of an LED lighting fixture for fitting as original equipment. It will also be understood that features of the networked lighting system and relaying protocol described herein may have application to other systems where it is desirable to propagate a signal or message to several recipients (nodes) of the system.

It will also be understood that any of the features described herein may be employed separately or in combination with any other features and the invention extends to and includes all combinations and sub-combinations of one or more features described herein in any form of light unit and lighting system employing the light units.

## Claims

1. An LED light unit for replacing a fluorescent tube of a fluorescent lighting fixture connected to a power source, the light unit having at least one visible light producing LED load and at least one non visible light producing load, wherein the loads are driven to provide a constant input operating voltage to the light unit when the light unit is used with a ballast and wherein the power derived is dissipated in any one or more of the loads.

2. The LED light unit of claim 1 wherein the or each LED load comprises at least one LED selected from the group comprising a white LED and a coloured LED.

3. The LED light unit of claim 1 or claim 2 wherein the or each non visible light producing load comprises at least one zener diode.

4. The LED light unit according to any preceding claim wherein the light unit includes communication means for communicating with a remote control unit.

5. The LED light unit according to claim 4 wherein the communication means comprises a wireless link such as an infra-red data link.

6. The LED light unit according to claim 5 wherein the wireless link allows communication between the light unit and another light unit for relaying a control signal received by the light unit to said another light unit.

7. The LED light unit according to any preceding claim wherein the light unit is operable to vary the brightness and/or colour of the light emitted by the or each LED load to alter the illumination provided by the light unit.

8. An LED lighting system comprising a plurality of LED light units according to any of the preceding claims and a control unit for controlling the LED light units.

9. The LED lighting system according to claim 8 wherein a wireless link such as an infra-red data link is provided for transmitting a control signal from the control unit to the light units.

10. The LED lighting system according to claim 9 wherein the control unit communicates with at least one light unit and the control signal is relayed from said at least one light unit to the remaining light units by a wireless link such as an infra-red data link.

11. The LED lighting system according to claim 10 wherein the control signal is propagated throughout the system of light units by retransmission using an unacknowledged protocol or an acknowledged protocol.

12. The LED lighting system according to claim 10 or claim 11 wherein receipt of a message from a first transmitting light unit is assured by the subsequent retransmission of the message by a second receiving light unit whose retransmission is visible to the first transmitting light unit and to subsequent light units which could not receive the message from the first transmitting light unit and wherein the propagation ends when no further light units are left to receive the message and retries from previous transmitting light units which see no further retransmission of the message count out.

13. The LED lighting system according to any of claims 10 to 12 wherein the control signal includes a data field containing a hop count that indicates the number of times the control signal has been retransmitted and the data field is incremented by one on receipt of the control signal before any retransmission and retransmission only occurs if the hop count in a received control signal is less than a hop count limit.

14. The LED lighting system according to any of claims 10 to 13 wherein the control signal includes a data field containing a record of the retransmission time delay used by each transmitting light unit and wherein the data field represents the total time elapsed since the message was initiated by the control unit and is used to produce a synchronous control effect in one or more units of the system after a fixed or variable time delay to negate the effects of the control signal propagation delay from the relaying protocol.

15. The LED lighting system according to any of claims 10 to 14 wherein the relaying protocol employs a double transmission of each message wherein a first transmission of the message is followed by a second transmission of the same message, wherein the message is propagated using a lower number of back-off time slots in the first transmission than in the second transmission.
